# EUROPEAN PATENT APPLICATION

(11) **EP 4 803 371 A1**
(43) Date of publication of application: **09.09.2026**
(21) Application number: 26160343.5
(22) Date of filing: 24.02.2026
(51) Int. Cl.: B60Q 1/14

(54) **LIGHTING CONTROL DEVICE, CONTROL METHOD FOR LIGHTING CONTROL DEVICE, AND LIGHTING CONTROL PROGRAM**

(30) Priority: 03.03.2025 JP 2025033047
(71) Applicant: Toyota Jidosha Kabushiki Kaisha, Toyota-shi, Aichi-ken 471-8571 (JP)
(72) Inventor: SUGIMOTO, Tsuyoshi, Toyota-shi, 471-8571 (JP)
(74) Representative: J A Kemp LLP

(57) **Abstract**

A lighting control device (100) configured to control a lighting device of a vehicle, the lighting control device includes: an illuminance recognition unit (12) configured to recognize an illuminance around the vehicle based on a detection result of an in-vehicle sensor; and a lighting control unit (15) configured to turn on a clearance lamp including a tail lamp (23) of the vehicle as a daytime running light when a predetermined DRL illuminance condition is satisfied based on a recognition result of the illuminance. The lighting control unit suspends or delays at least one of an ON switching for turning on the clearance lamp when the DRL illuminance condition is satisfied while the clearance lamp is OFF and an OFF switching for turning off the clearance lamp when the DRL illuminance condition is not satisfied while the clearance lamp is ON, as a condition change count that is a count of switching between satisfaction and non-satisfaction of the DRL illuminance condition increases.

## Description

### TECHNICAL FIELD

The present invention relates to a lighting control device, a control method for a lighting control device, and a lighting control program.

### BACKGROUND

In the related art, an automotive headlamp is known that includes a daytime running light for notifying other traveling vehicles and pedestrians that the vehicle is traveling by turning on the light even during daytime (for example, Japanese Unexamined Patent Publication No. 2003-306074).

In this technical field, lighting control may be requested to turn on not only a headlamp of a vehicle but also a clearance lamp including a tail lamp of the vehicle as a daytime running light (DRL) under a predetermined illuminance condition.

However, when the illuminance condition is temporarily satisfied, for example, when the vehicle enters a shadow in clear or sunny weather, the lighting control may operate intermittently.

### SUMMARY

According to an aspect of the present invention, there is provided a lighting control device configured to control a lighting device of a vehicle, the lighting control device including: an illuminance recognition unit configured to recognize an illuminance around the vehicle based on a detection result of an in-vehicle sensor; and a lighting control unit configured to turn on a clearance lamp including a tail lamp of the vehicle as a daytime running light when a predetermined DRL illuminance condition is satisfied based on a recognition result of the illuminance, wherein the lighting control unit suspends or delays at least one of an ON switching for turning on the clearance lamp when the DRL illuminance condition is satisfied while the clearance lamp is OFF and an OFF switching for turning off the clearance lamp when the DRL illuminance condition is not satisfied while the clearance lamp is ON, as a condition change count that is a count of switching between satisfaction and non-satisfaction of the DRL illuminance condition increases.

In the lighting control device according to the aspect of the present invention, at least one of the ON switching and the OFF switching is suspended or delayed as the condition change count that is the count of switching between satisfaction and non-satisfaction of the DRL illuminance condition increases. Therefore, even when the DRL illuminance condition is intermittently satisfied temporarily despite bright surroundings such as during daytime, switching between turning on and turning off the clearance lamp gradually becomes less likely to be repeated as the condition change count increases. Accordingly, according to the lighting control device according to the aspect of the present invention, hunting of lighting control that uses the clearance lamp including the tail lamp as the daytime running light can be suppressed.

In one example, the DRL illuminance condition is satisfied when the illuminance is equal to or less than a predetermined DRL illuminance threshold, the condition change count is a cumulative count of switching between satisfaction and non-satisfaction of the DRL illuminance condition during a current drive cycle of the vehicle, and the lighting control unit may delay the OFF switching so as to lengthen a delay time as the condition change count increases. In this case, the clearance lamp is turned on when the illuminance is equal to or less than the DRL illuminance threshold, while the delay time of the OFF switching becomes longer as the condition change count increases during the current drive cycle. Therefore, hunting of the lighting control can be suppressed while ensuring the function of the daytime running light when the illuminance is equal to or less than the DRL illuminance threshold.

In one example, the lighting control device may include a shadow estimation unit configured to estimate a shadow state of the vehicle based on a current vehicle position of the vehicle and a solar radiation state at the vehicle position, and when it is estimated that the shadow is blocking solar radiation to the in-vehicle sensor when the DRL illuminance condition is satisfied while the clearance lamp is OFF, the lighting control unit may suspend or delay the ON switching. By suspending or delaying the ON switching in this manner, even when the illuminance temporarily becomes equal to or less than the DRL illuminance threshold because the shadow blocks solar radiation to the in-vehicle sensor, the clearance lamp is less likely to be repeatedly turned on. Thus, hunting of the lighting control can be suppressed.

In one example, the lighting control device may include a weather recognition unit configured to recognize weather around the vehicle based on a captured image of an in-vehicle camera or a communication result via an in-vehicle communication unit, and when the weather is recognized as clear or sunny weather when the DRL illuminance condition is satisfied while the clearance lamp is OFF, the lighting control unit may suspend or delay the ON switching. By suspending or delaying the ON switching in this manner, even when the illuminance temporarily becomes equal to or less than the DRL illuminance threshold despite the weather being clear, the clearance lamp is less likely to be repeatedly turned on. Thus, hunting of the lighting control can be suppressed.

According to another aspect of the present invention, there is provided a control method for a lighting control device configured to control a lighting device of a vehicle, the control method including: an illuminance recognition step of recognizing an illuminance around the vehicle based on a detection result of an in-vehicle sensor, by the lighting control device; and a lighting control step of turning on a clearance lamp including a tail lamp of the vehicle as a daytime running light when a predetermined DRL illuminance condition is satisfied based on a recognition result of the illuminance, by the lighting control device, wherein, in the lighting control step, at least one of an ON switching for turning on the clearance lamp when the DRL illuminance condition is satisfied while the clearance lamp is OFF and an OFF switching for turning off the clearance lamp when the DRL illuminance condition is not satisfied while the clearance lamp is ON is suspended or delayed, as a condition change count that is a count of switching between satisfaction and non-satisfaction of the DRL illuminance condition increases.

In the control method for a lighting control device according to another aspect of the present invention, in the lighting control step, at least one of the ON switching and the OFF switching is suspended or delayed as the condition change count that is the count of switching between satisfaction and non-satisfaction of the DRL illuminance condition increases. Therefore, even when the DRL illuminance condition is intermittently satisfied temporarily despite bright surroundings such as during daytime, switching between turning on and turning off the clearance lamp gradually becomes less likely to be repeated as the condition change count increases. Accordingly, according to the control method for a lighting control device according to another aspect of the present invention, hunting of lighting control that uses the clearance lamp including the tail lamp as the daytime running light can be suppressed.

According to still another aspect of the present invention, there is provided a lighting control program causing a computer to function as a lighting control device configured to control a lighting device of a vehicle, the lighting control program causing the computer to function as: an illuminance recognition unit configured to recognize an illuminance around the vehicle based on a detection result of an in-vehicle sensor; and a lighting control unit configured to turn on a clearance lamp including a tail lamp of the vehicle as a daytime running light when a predetermined DRL illuminance condition is satisfied based on a recognition result of the illuminance, wherein the lighting control unit suspends or delays at least one of an ON switching for turning on the clearance lamp when the DRL illuminance condition is satisfied while the clearance lamp is OFF and an OFF switching for turning off the clearance lamp when the DRL illuminance condition is not satisfied while the clearance lamp is ON, as a condition change count that is a count of switching between satisfaction and non-satisfaction of the DRL illuminance condition increases.

In the lighting control program according to still another aspect of the present invention, at least one of the ON switching and the OFF switching is suspended or delayed as the condition change count that is the count of switching between satisfaction and non-satisfaction of the DRL illuminance condition increases. Therefore, even when the DRL illuminance condition is intermittently satisfied temporarily despite bright surroundings such as during daytime, switching between turning on and turning off the clearance lamp gradually becomes less likely to be repeated as the condition change count increases. Accordingly, according to the lighting control program according to still another aspect of the present invention, hunting of lighting control that uses the clearance lamp including the tail lamp as the daytime running light can be suppressed.

According to various aspects of the present invention, hunting of lighting control that uses the clearance lamp including the tail lamp as the daytime running light can be suppressed.

### BRIEF DESCRIPTION OF THE DRAWINGS

FIG. 1 is a block diagram illustrating a configuration of a lighting control device according to an example.
FIG. 2 is a flowchart illustrating an example of lighting control processing of the ECU of FIG. 1.
FIG. 3 is a flowchart illustrating an example of OFF switching delay processing of FIG. 2.
FIG. 4 is a flowchart illustrating an example of ON switching delay processing of FIG. 2.
FIG. 5 is a flowchart illustrating another example of ON switching delay processing of FIG. 2.
FIG. 6 is a flowchart illustrating another example of lighting control processing of the ECU of FIG. 1.
FIG. 7 is a flowchart illustrating an example of illuminance filter value calculation processing of FIG. 6.

### DETAILED DESCRIPTION

Hereinafter, an example of the present invention will be described with reference to the drawings.

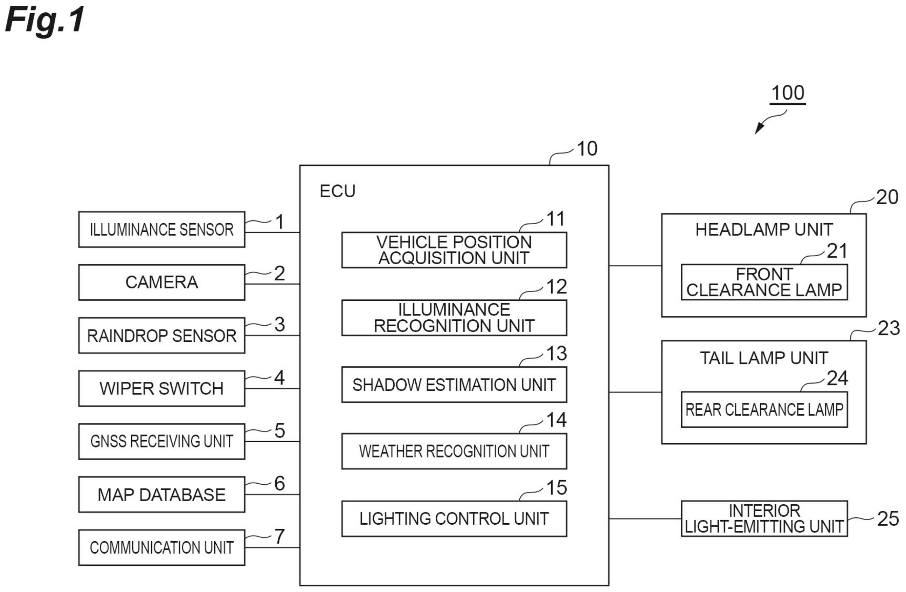

FIG. 1 is a block diagram illustrating a configuration of a lighting control device according to an example. A lighting control device 100 is mounted on a vehicle and is a device configured to control a lighting device of the vehicle. The lighting control device 100 turns on the lighting device of the vehicle as a daytime running light (DRL) when surroundings of the vehicle are bright. The lighting control device 100 here is configured to turn on not only a headlamp of the vehicle but also a clearance lamp including a tail lamp of the vehicle as a daytime running light under a predetermined illuminance condition.

As shown in FIG. 1, the lighting control device 100 includes an Electronic Control Unit (ECU) 10. The ECU 10 is an electronic control unit including a Central Processing Unit (CPU), a storage unit, and an interface. The storage unit includes, for example, ROM (Read Only Memory), RAM (Random Access Memory), EEPROM (Electrically Erasable Programmable Read-Only Memory), and the like. In the ECU 10, for example, various functions are realized by executing programs stored in the storage unit with the CPU. The ECU 10 may include a plurality of electronic units.

The lighting control device 100 includes, as components connected to the ECU 10 and inputting information to the ECU 10, an illuminance sensor 1 (in-vehicle sensor), a camera 2, a raindrop sensor 3, a wiper switch 4, a GNSS receiving unit 5, a map database 6, and a communication unit 7.

The illuminance sensor 1 is a detection device that detects illuminance around the vehicle. The illuminance around the vehicle is illuminance used for automatically turning on or off the lighting device of the vehicle. When the illuminance is detected using the illuminance sensor 1, the illuminance around the vehicle may be illuminance of a range including at least the illuminance sensor 1 in the vehicle. The illuminance sensor 1 is disposed, for example, on a dashboard below a windshield in a front area of the vehicle interior. The location where the illuminance sensor 1 is disposed is not limited to the front of the vehicle interior. The illuminance sensor 1 may be disposed on a side of the vehicle interior, a rear side of the vehicle interior, or outside the vehicle. The illuminance sensor 1 may have a known configuration using a light detection element such as a photodiode or a phototransistor. The illuminance sensor 1 transmits a detection signal related to illuminance to the ECU 10.

The camera 2 is an imaging device that captures images of the surrounding environment of the vehicle. The camera 2 is provided, for example, on a back surface of an inner mirror (rear-view mirror) on a back side of the windshield of the vehicle. The camera 2 captures images in front of the vehicle. The camera transmits captured images related to situations in front of the vehicle to the ECU 10.

The raindrop sensor 3 is a detection device that detects raindrops adhering to glass of the vehicle. The raindrop sensor 3 is provided, for example, on an inner side of the windshield. The camera 2 can detect presence or adhesion amount of raindrops. The raindrop sensor 3 may have a known configuration such as an optical type or a capacitive type. The raindrop sensor 3 transmits detection results related to the presence or adhesion amount of raindrops to the ECU 10.

The wiper switch 4 is an operation unit for an occupant to change an operating state of a wiper of the vehicle. The wiper switch 4 is, for example, a switch lever provided on a steering column. The wiper switch 4 transmits, for example, information related to operating states such as on, off, or intermittent operation of the wiper to the ECU 10.

The GNSS receiving unit 5 receives signals from positioning satellites to measure a vehicle position (for example, latitude and longitude of the vehicle) which is a current position of the vehicle. The GNSS receiving unit 5 transmits information on the measured vehicle position to the ECU 10.

The map database 6 is a storage device that stores map information. The map database 6 is formed, for example, in a storage medium such as an HDD (Hard Disk Drive) mounted on the vehicle. The map information includes geographic information such as road information, building information, and terrain information. The map information includes information on roads where solar radiation may be temporarily blocked. Examples of roads where solar radiation may be temporarily blocked include tunnels, areas under elevated structures, underground roads, underpasses, and cuts. The map information may include dimension information about structures that form shadows. Examples of dimension information about structures that form shadows include positions, shapes, heights, and the like of structures such as buildings. The map information may include dimension information about natural objects that form shadows. Examples of dimension information about natural objects that form shadows include positions, shapes, heights, and the like of mountain slopes, trees, and the like. The map information may include information related to sunlight. Examples of information related to sunlight include positions of the sun at current latitudes and longitudes, sunrise times, sunset times, and the like.

The map information may include information on positions of intersections on a map, information on shapes of intersections, information related to sidewalks provided along roadways, and partitions that separate sidewalks and roadways. The partitions refer to, for example, guardrails, plantings, fences, curbs, and the like. The map database 6 may be formed in a server capable of communicating with the vehicle. The map database 6 transmits map information to the ECU 10 in response to reading by the ECU 10.

The communication unit 7 is a transceiver for performing data communication between the vehicle and external information sources. The communication unit 7 can perform data communication, for example, between the ECU 10 of the vehicle and external servers or infrastructure. The communication unit 7 can transmit and receive information using known wireless communication technology (for example, LTE or 5G). The communication unit 7 is configured to acquire weather information at the vehicle position from external weather information services. The communication unit 7 transmits information acquired from outside to the ECU 10.

The lighting control device 100 includes, as lighting devices, a headlamp unit 20 and a tail lamp unit 23.

The headlamp unit 20 is a lighting device unit including a headlight for illuminating an area in front of the vehicle. The headlamp unit 20 includes a front clearance lamp 21. The front clearance lamp 21 is a lighting device that turns on at a front part of the vehicle to indicate a width of the vehicle at night. The front clearance lamp 21 turns on at a lower luminous intensity than the headlight. The front clearance lamp 21 here is turned on so as to function as a daytime running light when a predetermined DRL illuminance condition (described later) is satisfied during daytime. Turning on and turning off of the headlight and the front clearance lamp 21 of the headlamp unit 20 are controlled by the ECU 10.

The tail lamp unit 23 is a lighting device unit for emitting light as a signal to the rear of the vehicle. The tail lamp unit 23 is a so-called combination lamp. The tail lamp unit 23 includes a rear clearance lamp 24. The rear clearance lamp 24 is a lighting device that turns on at a rear part of the vehicle to indicate a width of the vehicle at night. The rear clearance lamp 24 turns on at a lower luminous intensity than a brake lamp. The rear clearance lamp 24 here is turned on so as to function as a daytime running light when the predetermined DRL illuminance condition is satisfied during daytime. Turning on and turning off of the combination lamp and the rear clearance lamp 24 of the tail lamp unit 23 are controlled by the ECU 10.

The lighting control device 100 includes an interior light-emitting unit 25. The interior light-emitting unit 25 is a light-emitting device installed inside the vehicle. The interior light-emitting unit 25 includes, for example, an indicator disposed in a meter and a screen of a navigation device.

The indicator disposed in the meter is a display for notifying an occupant of a lighting state of the lighting device. The indicator disposed in the meter turns on when the headlight turns on. The indicator disposed in the meter turns on when the front clearance lamp 21 and the rear clearance lamp 24 turn on. The indicator disposed in the meter is configured, for example, to display a predetermined pictogram. The indicator disposed in the meter may be a physical lamp or may be a display of an image on a digital meter. Brightness of a screen of the navigation device may be automatically changed in conjunction with turning on and turning off of the indicator disposed in the meter. The interior light-emitting unit 25 switches between turning on and turning off in conjunction with turning on and turning off of the headlamp unit 20 and the tail lamp unit 23 being controlled by the ECU 10.

The ECU 10 includes, as functional configurations, a vehicle position acquisition unit 11, an illuminance recognition unit 12, a shadow estimation unit 13, a weather recognition unit 14, and a lighting control unit 15.

The vehicle position acquisition unit 11 acquires a current vehicle position of the vehicle based on a positioning result of the GNSS receiving unit 5. The vehicle position acquisition unit 11 may acquire a current vehicle position of the vehicle using a self-position of the vehicle estimated by SLAM (Simultaneous Localization and Mapping) technology. The vehicle position acquisition unit 11 may acquire a position of the vehicle relative to structures such as buildings existing around the vehicle based on a current vehicle position of the vehicle and map information. The vehicle position acquisition unit 11 may acquire a position of the vehicle when traveling through tunnels, areas under elevated structures, underground roads, underpasses, and the like based on a current vehicle position of the vehicle and map information. The vehicle position acquisition unit 11 may acquire information related to a traveling direction (vehicle azimuth) of the vehicle based on changes in positioning results of the GNSS receiving unit 5.

The illuminance recognition unit 12 recognizes illuminance around the vehicle based on a detection result of the illuminance sensor 1. The illuminance recognition unit 12 converts a detection signal related to illuminance received from the illuminance sensor 1 into a value of illuminance whose unit is "lx", for example, by a known method. When converting a detection signal related to illuminance into a value of illuminance, the illuminance recognition unit 12 may perform filtering that smooths the detection signal to a degree that removes noise of the detection signal. Filtering to a degree that removes noise of a detection signal may be, for example, filtering such that when a vehicle enters a shaded area from a sunny area, a change in illuminance value corresponding to 50% of an illuminance difference between the sunny area and the shaded area occurs within 500 msec from when the vehicle enters the shaded area.

The shadow estimation unit 13 estimates a shadow state of the vehicle based on a current vehicle position acquired by the vehicle position acquisition unit 11 and a solar radiation state at the current vehicle position. The shadow state of the vehicle is, for example, a state of whether solar radiation to the illuminance sensor 1 is blocked at the current vehicle position.

The shadow estimation unit 13 estimates a solar radiation state at a current position of the vehicle based on a current vehicle position acquired by the vehicle position acquisition unit 11 and map information of the map database 6. The shadow estimation unit 13 determines whether an estimated shadow is blocking solar radiation to the illuminance sensor 1. The shadow estimation unit 13 may determine that a shadow is blocking solar radiation to the illuminance sensor 1 when an entire vehicle is included in an estimated shadow.

The shadow estimation unit 13 estimates, for example, a range of shadows of objects around the vehicle based on a solar radiation direction at a current time and dimensions of objects such as buildings, trees, terrain, and the like existing around a current vehicle position. When a vehicle position is within a range of shadows of objects, the shadow estimation unit 13 determines whether an estimated shadow is blocking solar radiation to the illuminance sensor 1. The shadow estimation unit 13 may determine whether a shadow is cast on the illuminance sensor 1 based on latitude and longitude of a current vehicle position, a solar elevation angle estimated from a current time, and a current vehicle azimuth.

The shadow estimation unit 13 may determine that a shadow is blocking solar radiation to the illuminance sensor 1 when the vehicle is currently traveling on a road where solar radiation may be temporarily blocked. In this case, the shadow estimation unit 13 may determine that a shadow is blocking solar radiation to the illuminance sensor 1 when a time during which the vehicle is traveling on a road where solar radiation may be temporarily blocked is within a predetermined time. The predetermined time here may be a time set in advance in consideration of solar radiation being temporarily blocked due to such roads.

The weather recognition unit 14 recognizes weather around the vehicle based on a captured image of the camera 2, a detection result of the raindrop sensor 3, an operation state of the wiper switch 4, or a communication result via the communication unit 7. The weather recognition unit 14 analyzes, for example, a state of a sky in front of the vehicle (for example, color of the sky, amount of clouds) based on a captured image of the camera 2, and recognizes weather (clear, sunny, cloudy, rainy, etc.). The weather recognition unit 14 can recognize weather using a known image analysis algorithm.

The weather recognition unit 14 may recognize the weather as not rainy when there are no raindrops adhering to the windshield of the vehicle based on a detection result of the raindrop sensor 3. The weather recognition unit 14 may recognize the weather as rainy when a state in which an adhesion amount of raindrops adhering to the windshield of the vehicle is equal to or greater than a predetermined adhesion amount threshold value continues for a predetermined time based on a detection result of the raindrop sensor 3. The adhesion amount threshold value is a threshold value of an adhesion amount of raindrops for distinguishing whether detected water droplets are caused by rain. The weather recognition unit 14 may recognize the weather as rainy when a state in which an operation state of the wiper switch 4 is ON or intermittent operation continues for a predetermined time. The predetermined time here is a determination time for excluding situations such as car washing. Water droplets resulting from melted snow may be regarded as raindrops and treated as being included in raindrops and rainy weather.

The weather recognition unit 14 can also acquire weather information from external weather information services via the communication unit 7. The weather recognition unit 14 may recognize weather at a current position of the vehicle according to whether current weather is clear, sunny, cloudy, rainy, or the like as weather information. The weather recognition unit 14 may recognize whether weather at a current position of the vehicle is rainy according to a current situation of a rain cloud radar as weather information.

Based on the recognition results of the weather recognition unit 14, for example, when the weather is recognized as clear or sunny, it is considered that the surroundings of the vehicle are bright if a shadow of a building or the like is not cast on the vehicle. When rainy weather is recognized, it can be considered that the surroundings of the vehicle are dark.

The lighting control unit 15 turns on the front clearance lamp 21 and the rear clearance lamp 24 as a daytime running light when a predetermined DRL illuminance condition is satisfied based on a recognition result of illuminance. The front clearance lamp 21 and the rear clearance lamp 24 are examples of a clearance lamp including a tail lamp of the vehicle. The lighting control unit 15 determines, for example, that the DRL illuminance condition is satisfied when the illuminance value is equal to or less than a predetermined DRL illuminance threshold value, and turns on the front clearance lamp 21 and the rear clearance lamp 24. The lighting control unit 15 determines that the DRL illuminance condition is not satisfied when the illuminance value exceeds the DRL illuminance threshold value, and turns off the front clearance lamp 21 and the rear clearance lamp 24.

The DRL illuminance threshold value is a threshold value of an illuminance value for determining satisfaction and non-satisfaction of a DRL illuminance condition. The DRL illuminance threshold value can be 7000 1x, for example, when complying with safety standards such as UNR48. Note that, when the illuminance value is 1000 lx, the daytime running light using only an existing headlight turns on.

The lighting control unit 15 suspends or delays at least one of ON switching and OFF switching as a condition change count that is a count of switching between satisfaction and non-satisfaction of the DRL illuminance condition increases. The ON switching means lighting control of the lighting control unit 15 that turns on the front clearance lamp 21 and the rear clearance lamp 24 when the DRL illuminance condition is satisfied while the front clearance lamp 21 and the rear clearance lamp 24 are off. The OFF switching means lighting control of the lighting control unit 15 that turns off the front clearance lamp 21 and the rear clearance lamp 24 when the DRL illuminance condition is not satisfied while the front clearance lamp 21 and the rear clearance lamp 24 are on.

The condition change count means a cumulative count of switching between satisfaction and non-satisfaction of the DRL illuminance condition during a predetermined period. As a specific example, the condition change count is a cumulative count of switching between satisfaction and non-satisfaction of the DRL illuminance condition during a current drive cycle of the vehicle. A drive cycle means a period from when power of the ECU 10 is turned on until the power of the ECU 10 is next turned off. The condition change count may be accumulated, for example, by using a counter that is reset to 0 times when the power of the ECU 10 is turned on, and increasing the counter by 1 each time satisfaction and non-satisfaction of the DRL illuminance condition are switched.

The lighting control unit 15 delays the OFF switching so as to lengthen a delay time as the condition change count increases. Delaying the OFF switching means executing the OFF switching after waiting for the predetermined delay time to elapse. The delay time is a waiting time for suppressing hunting of lighting control. The lighting control unit 15 may add a predetermined number of seconds to the delay time of the OFF switching of the clearance lamp each time the condition change count increases by a predetermined count. For example, the lighting control unit 15 may add 5 seconds to the delay time of the OFF switching of the clearance lamp each time the condition change count increases by 5. The predetermined count and the predetermined number of seconds are not limited to these examples. The predetermined count and the predetermined number of seconds are set by conducting tests, simulations, or the like in advance so as to suppress hunting of lighting control while performing a function of a daytime running light by the front clearance lamp 21 and the rear clearance lamp 24. In this case, since the delay time becomes longer as the condition change count increases, even if turning on and turning off of the daytime running light by the front clearance lamp 21 and the rear clearance lamp 24 are repeated in a short period due to temporary changes in illuminance, the ON switching gradually becomes less likely to be performed.

The lighting control unit 15 may suspend or delay the ON switching when it is estimated by the shadow estimation unit 13 that a shadow is blocking solar radiation to the illuminance sensor 1 when the DRL illuminance condition is satisfied while the front clearance lamp 21 and the rear clearance lamp 24 are off. Suspending the ON switching means not performing the ON switching until the DRL illuminance condition is not satisfied. Delaying the ON switching means executing the ON switching after waiting for the predetermined delay time to elapse. In this case, even if surroundings of the vehicle temporarily become dark due to shadows repeatedly in a situation where surroundings of the vehicle are bright such that the front clearance lamp 21 and the rear clearance lamp 24 are off, the ON switching gradually becomes less likely to occur.

The lighting control unit 15 may suspend or delay the ON switching when weather is recognized as clear or sunny when the DRL illuminance condition is satisfied while the front clearance lamp 21 and the rear clearance lamp 24 are off. In this case, even if the DRL illuminance condition is repeatedly satisfied due to temporary causes in a situation where the surroundings of the vehicle are expected to be bright such as when the weather is clear or sunny, the ON switching gradually becomes less likely to occur.

The lighting control unit 15 may execute the ON switching if it is estimated by the shadow estimation unit 13 that a shadow is not blocking solar radiation to the illuminance sensor 1 when the DRL illuminance condition is satisfied while the front clearance lamp 21 and the rear clearance lamp 24 are off. The lighting control unit 15 may execute the ON switching when weather is recognized as cloudy or rainy when the DRL illuminance condition is satisfied while the front clearance lamp 21 and the rear clearance lamp 24 are off.

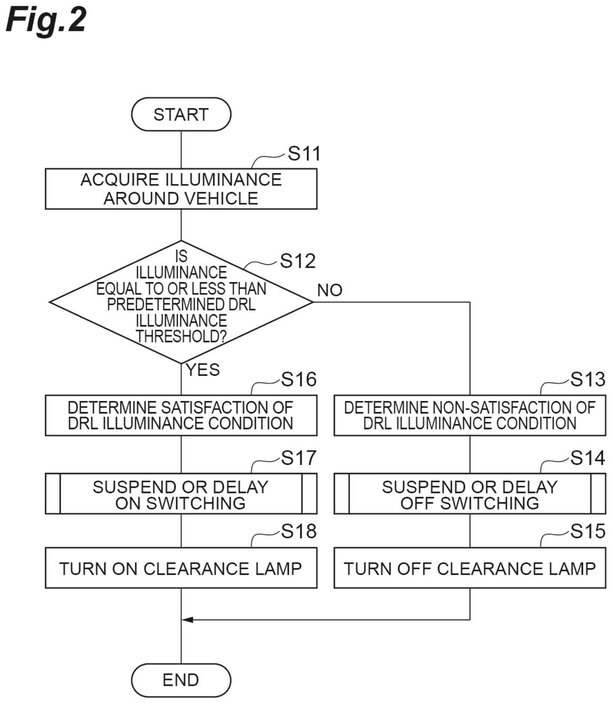

Next, processing of the ECU 10 in the lighting control device 100 and a control method for a lighting control device will be described with reference to a flowchart of FIG. 2. Processing of the flowchart of FIG. 2 is repeatedly executed, for example, at predetermined calculation intervals in a state where the power of the ECU 10 of the vehicle is ON. In FIG. 2, step S11 corresponds to an illuminance recognition step, and steps S12 to S18 correspond to a lighting control step.

As shown in FIG. 2, the ECU 10 of the lighting control device 100 acquires illuminance around the vehicle by the illuminance recognition unit 12 in step S11. The illuminance recognition unit 12 recognizes illuminance around the vehicle based on data from the illuminance sensor 1.

In step S12, the ECU 10 determines, by the lighting control unit 15, whether acquired illuminance is equal to or less than a predetermined DRL illuminance threshold value. When it is determined by the lighting control unit 15 that illuminance exceeds a predetermined DRL illuminance threshold value (step S12: NO), the ECU 10 proceeds to step S13. In step S13, the lighting control unit 15 determines non-satisfaction of the DRL illuminance condition.

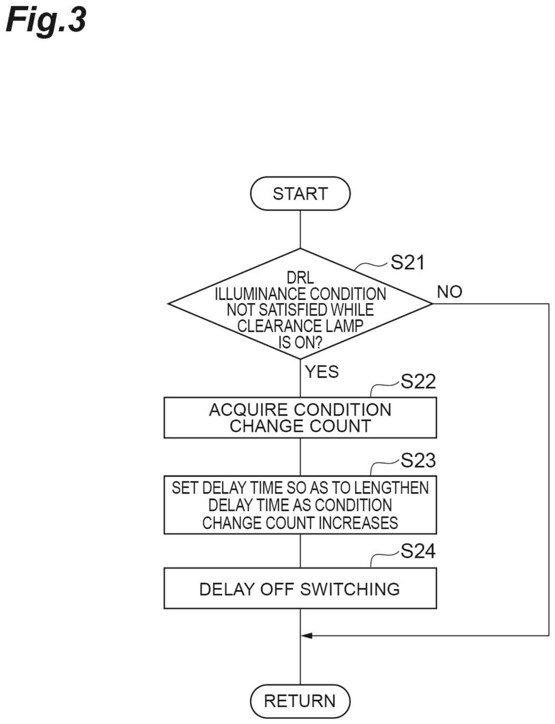

In step S14, the lighting control unit 15 suspends or delays OFF switching. Specifically, the ECU 10 performs, for example, processing of FIG. 3 as processing of step S14.

As shown in FIG. 3, the ECU 10 determines, by the lighting control unit 15, whether the DRL illuminance condition is not satisfied while a clearance lamp is ON in step S21. In FIG. 3, steps S21 to S24 correspond to a lighting control step.

When it is determined by the lighting control unit 15 that the DRL illuminance condition is not satisfied while the clearance lamp is ON (step S21: YES), in step S22, the ECU 10 acquires the condition change count by the lighting control unit 15. The lighting control unit 15 counts switching between satisfaction and non-satisfaction of the DRL illuminance condition during a current drive cycle of the vehicle based on illuminance recognized by the illuminance recognition unit 12, and acquires the condition change count.

In step S23, the ECU 10 sets the delay time by the lighting control unit 15 so as to lengthen the delay time as the condition change count increases. The lighting control unit 15 may, for example, add a predetermined number of seconds to the delay time of the OFF switching of the clearance lamp each time the condition change count increases by a predetermined count.

In step S24, the ECU 10 suspends or delays the OFF switching by the lighting control unit 15. The lighting control unit 15 maintains turning on of the clearance lamp until the delay time elapses from when the DRL illuminance condition is not satisfied even when the DRL illuminance condition is not satisfied. Alternatively, the lighting control unit 15 may maintain turning on of the clearance lamp and suspend the OFF switching even when the DRL illuminance condition is not satisfied. Thereafter, the ECU 10 ends processing of FIG. 3 and returns to processing of step S15 of FIG. 2.

On the other hand, when the DRL illuminance condition is satisfied (is not unsatisfied) while the clearance lamp is ON (step S21: NO), the ECU 10 ends processing of FIG. 3 and returns to processing of step S15 of FIG. 2. In step S15, the ECU 10 executes turning off of the clearance lamp by the lighting control unit 15. Thereafter, the ECU 10 ends processing of FIG. 2.

On the other hand, when it is determined by the lighting control unit 15 that illuminance is equal to or less than a predetermined DRL illuminance threshold value (step S12: YES), the ECU 10 proceeds to step S16. In step S16, the lighting control unit 15 determines satisfaction of the DRL illuminance condition. In step S17, the lighting control unit 15 suspends or delays ON switching.

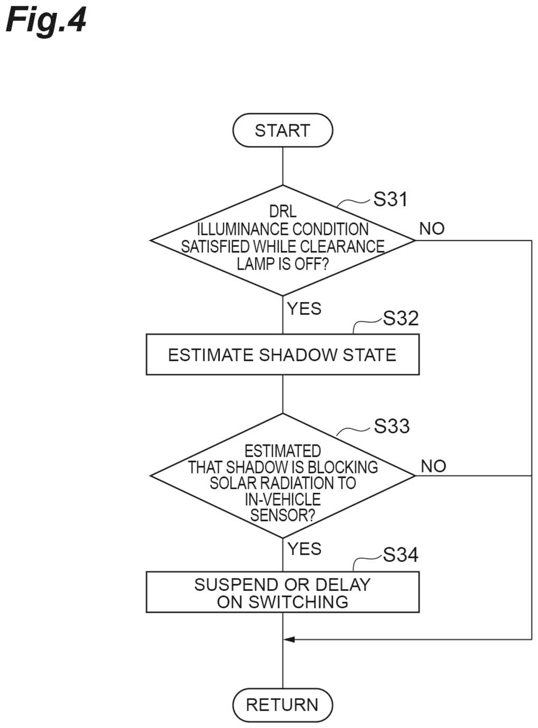

Specifically, the ECU 10 performs, for example, processing of FIG. 4 as processing of step S17. In FIG. 4, steps S32 and S33 correspond to a shadow estimation step, and steps S31 and S34 correspond to a lighting control step.

As shown in FIG. 4, the ECU 10 determines, by the lighting control unit 15, whether the DRL illuminance condition is satisfied while the clearance lamp is off in step S31. When it is determined by the lighting control unit 15 that the DRL illuminance condition is satisfied while the clearance lamp is off (step S31: YES), the ECU 10 proceeds to step S32.

In step S32, the ECU 10 estimates a shadow state by the shadow estimation unit 13. The shadow estimation unit 13 estimates, for example, a shadow state at a current vehicle position of the vehicle based on a vehicle position acquired by the vehicle position acquisition unit 11 and map information of the map database 6.

In step S33, the ECU 10 determines, by the shadow estimation unit 13, whether it is estimated that a shadow is blocking solar radiation to the illuminance sensor 1 (in-vehicle sensor).

When it is estimated by the shadow estimation unit 13 that a shadow is blocking solar radiation to the illuminance sensor 1 (step S33: YES), the ECU 10 suspends or delays the ON switching by the lighting control unit 15 in step S34. The lighting control unit 15 maintains turning off of the clearance lamp until the delay time elapses from when the DRL illuminance condition is satisfied even when the DRL illuminance condition is satisfied. Alternatively, the lighting control unit 15 may maintain turning off of the clearance lamp and suspend the ON switching even when the DRL illuminance condition is satisfied. The ECU 10 ends processing of FIG. 4 and returns to processing of step S18 of FIG. 2.

On the other hand, when it is estimated by the shadow estimation unit 13 that a shadow is not blocking solar radiation to the illuminance sensor 1 (step S33: NO), the ECU 10 ends processing of FIG. 4 and returns to processing of step S18 of FIG. 2.

On the other hand, when it is determined by the lighting control unit 15 that the DRL illuminance condition is not satisfied while the clearance lamp is off (step S31: NO), the ECU 10 ends processing of FIG. 4 and returns to processing of step S18 of FIG. 2.

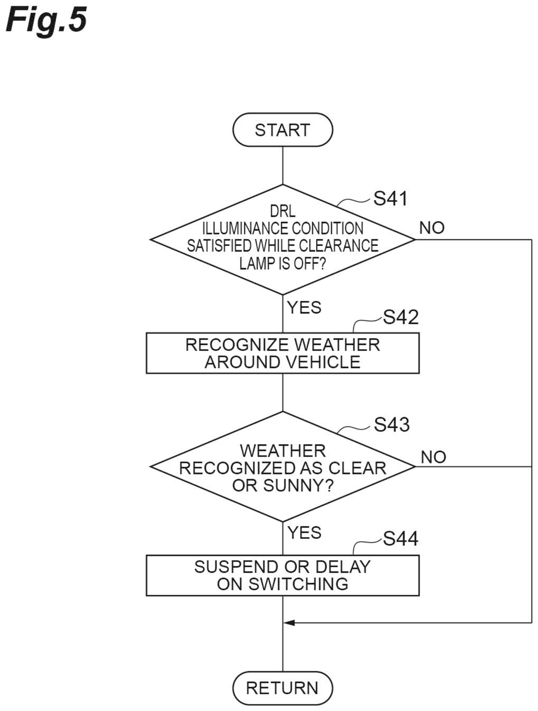

Alternatively, the ECU 10 may perform, for example, processing of FIG. 5 as processing of step S17. In FIG. 5, steps S42 and S43 correspond to a weather recognition step, and steps S41 and S44 correspond to a lighting control step.

As shown in FIG. 5, the ECU 10 determines, by the lighting control unit 15, whether the DRL illuminance condition is satisfied while the clearance lamp is off in step S41. When it is determined by the lighting control unit 15 that the DRL illuminance condition is satisfied while the clearance lamp is off (step S41: YES), the ECU 10 proceeds to step S42.

In step S42, the ECU 10 recognizes weather around the vehicle by the weather recognition unit 14. The weather recognition unit 14 recognizes, for example, weather around the vehicle based on a captured image of the camera 2 or a communication result via the communication unit 7. The weather recognition unit 14 may recognize weather around the vehicle based on detection results of raindrops by the raindrop sensor 3 or an operation position of the wiper switch 4.

In step S43, the ECU 10 determines, by the weather recognition unit 14, whether weather is recognized as clear or sunny.

When weather is recognized as clear or sunny by the weather recognition unit 14 (step S43: YES), the ECU 10 suspends or delays the ON switching by the lighting control unit 15 in step S44. The lighting control unit 15 maintains turning off of the clearance lamp until the delay time elapses from when the DRL illuminance condition is satisfied even when the DRL illuminance condition is satisfied. Alternatively, the lighting control unit 15 may maintain turning off of the clearance lamp and suspend the ON switching even when the DRL illuminance condition is satisfied. The ECU 10 ends processing of FIG. 5 and returns to processing of step S18 of FIG. 2.

On the other hand, when weather is not recognized as clear or sunny by the weather recognition unit 14 (step S43: NO), the ECU 10 ends processing of FIG. 5 and returns to processing of step S18 of FIG. 2.

On the other hand, when it is determined by the lighting control unit 15 that the DRL illuminance condition is not satisfied while the clearance lamp is off (step S41: NO), the ECU 10 ends processing of FIG. 5 and returns to processing of step S18 of FIG. 2. In step S18, the ECU 10 executes turning on of the clearance lamp by the lighting control unit 15. Thereafter, the ECU 10 ends processing of FIG. 2.

[Lighting Control Program] The lighting control program causes the ECU 10 (computer) to function (operate) as the vehicle position acquisition unit 11, the illuminance recognition unit 12, the shadow estimation unit 13, the weather recognition unit 14, and the lighting control unit 15 described above. The lighting control program may be provided, for example, by a non-transitory recording medium such as ROM or semiconductor memory. The lighting control program may be provided via communication such as a network.

As described above, in the lighting control device 100, the control method for a lighting control device, and the lighting control program, the OFF switching is suspended or delayed, by the lighting control unit 15 or a lighting control step, as the condition change count that is a count of switching between satisfaction and non-satisfaction of the DRL illuminance condition increases. The ON switching is suspended or delayed, by the lighting control unit 15 or a lighting control step, as the condition change count that is a count of switching between satisfaction and non-satisfaction of the DRL illuminance condition increases. Therefore, even when the DRL illuminance condition is intermittently satisfied temporarily despite bright surroundings such as during daytime, switching between turning on and turning off of the front clearance lamp 21 and the rear clearance lamp 24 gradually becomes less likely to be repeated as the condition change count increases. Accordingly, according to the lighting control device 100, the control method for a lighting control device, and the lighting control program, hunting of lighting control that uses the front clearance lamp 21 and the rear clearance lamp 24 including the tail lamp unit 23 as the daytime running light can be suppressed.

A DRL illuminance condition is satisfied when illuminance is equal to or less than a predetermined DRL illuminance threshold value. A condition change count is a cumulative count of switching between satisfaction and non-satisfaction of the DRL illuminance condition during a current drive cycle of the vehicle. The OFF switching is delayed by the lighting control unit 15 or a lighting control step so as to lengthen the delay time as the condition change count increases. As a result, while the front clearance lamp 21 and the rear clearance lamp 24 are turned on when illuminance is equal to or less than a DRL illuminance threshold value, the delay time of the OFF switching becomes longer as the condition change count increases during a current drive cycle. Therefore, hunting of lighting control can be suppressed while ensuring a function of the daytime running light when illuminance is equal to or less than a DRL illuminance threshold value.

A shadow state of the vehicle is estimated based on a current vehicle position of the vehicle and a solar radiation state at the vehicle position by the shadow estimation unit 13 or a shadow estimation step. When it is estimated that a shadow is blocking solar radiation to the illuminance sensor 1 when the DRL illuminance condition is satisfied while the front clearance lamp 21 and the rear clearance lamp 24 are off, the ON switching is suspended or delayed by the lighting control unit 15 or a lighting control step. By suspending or delaying the ON switching in this manner, even when illuminance temporarily becomes equal to or less than a DRL illuminance threshold value, for example, because a shadow blocks solar radiation to the illuminance sensor 1, the front clearance lamp 21 and the rear clearance lamp 24 are less likely to be repeatedly turned on. Thus, hunting of lighting control can be suppressed.

Weather around the vehicle is recognized based on a captured image of the in-vehicle camera 2 or a communication result via the in-vehicle communication unit 7 by the weather recognition unit 14 or a weather recognition step. When weather is recognized as clear or sunny weather when the DRL illuminance condition is satisfied while the front clearance lamp 21 and the rear clearance lamp 24 are off, the ON switching is suspended or delayed by the lighting control unit 15 or a lighting control step. By suspending or delaying the ON switching in this manner, even when illuminance temporarily becomes equal to or less than a DRL illuminance threshold value despite weather being clear, the front clearance lamp 21 and the rear clearance lamp 24 are less likely to be repeatedly turned on. Thus, hunting of lighting control can be suppressed.

Turning on or off of the interior light-emitting unit 25 is linked with the front clearance lamp 21 and the rear clearance lamp 24. Therefore, by suppressing hunting of lighting control that uses the front clearance lamp 21 and the rear clearance lamp 24 as the daytime running light, hunting of turning on or off of the interior light-emitting unit 25 can be suppressed. As a result, annoyance to occupants of the vehicle caused by repeated turning on or off of the interior light-emitting unit 25 can be suppressed.

Although the example of the present invention has been described above, the present invention is not limited to the above-described example.

In the above-described example, both the ON switching and the OFF switching are suspended or delayed as the condition change count that is a count of switching between satisfaction and non-satisfaction of the DRL illuminance condition increases, but the present invention is not limited to this example. Only one of the ON switching and the OFF switching may be suspended or delayed as the condition change count that is a count of switching between satisfaction and non-satisfaction of the DRL illuminance condition increases. In short, at least one of the ON switching and the OFF switching may be suspended or delayed as the condition change count that is a count of switching between satisfaction and non-satisfaction of the DRL illuminance condition increases.

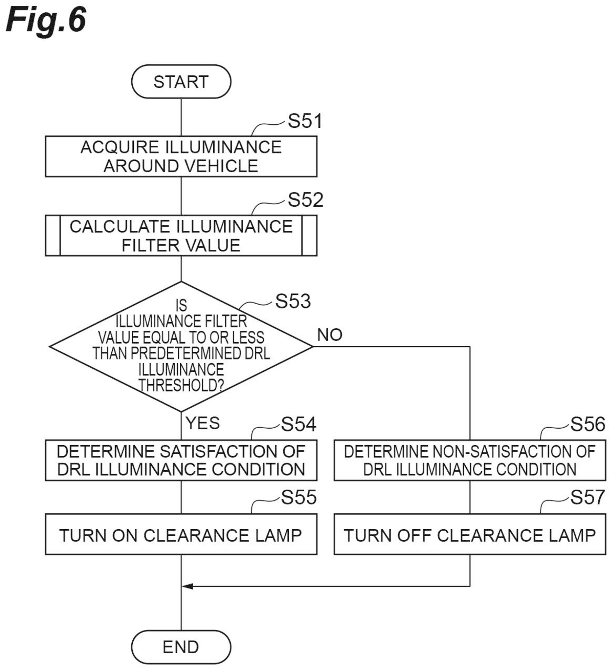

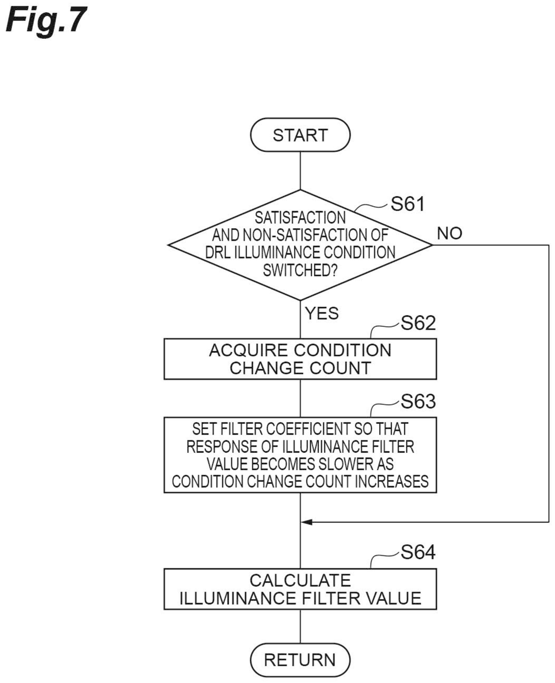

In the above-described example, in order to suspend or delay at least one of the ON switching and OFF switching, the delay time is lengthened as the condition change count increases, but the present invention is not limited to this example. For example, by strengthening filtering when the illuminance recognition unit 12 calculates a value of illuminance, determination of the DRL illuminance condition using a value of illuminance after filtering may be delayed, thereby suspending or delaying at least one of the ON switching and OFF switching. The ECU 10 may perform, for example, processing as shown in FIGS. 6 and 7. In FIGS. 6 and 7, steps S51, S52, and S64 correspond to an illuminance recognition step, and steps S53 to S57 and S61 to S63 correspond to a lighting control step.

As shown in FIG. 6, the ECU 10 acquires illuminance around the vehicle by the illuminance recognition unit 12 in step S51 in a manner similar to step S11. In step S52, the ECU 10 calculates an illuminance filter value by the illuminance recognition unit 12. As processing of step S52, the ECU 10 may specifically perform processing of FIG. 7.

As shown in FIG. 7, the ECU 10 determines, by the lighting control unit 15, whether satisfaction and non-satisfaction of the DRL illuminance condition have switched in step S61. When it is determined by the lighting control unit 15 that satisfaction and non-satisfaction of the DRL illuminance condition are switched (step S61: YES), the ECU 10 proceeds to step S62 and acquires the condition change count. In step S62, the ECU 10 acquires the condition change count by the lighting control unit 15. The condition change count is a cumulative count of switching between satisfaction and non-satisfaction of the DRL illuminance condition during a current drive cycle of the vehicle.

In step S63, the ECU 10 sets a filter coefficient by the lighting control unit 15 so that response of an illuminance filter value becomes slower as the condition change count increases. The lighting control unit 15 may, for example, reset a filter coefficient so that response becomes slower by a predetermined ratio (for example, a predetermined %) each time the condition change count increases by a predetermined count. The filter coefficient is a filter coefficient such that response of a value of illuminance is delayed more than "filtering that smooths to a degree that removes noise of a detection signal" described above. The filter coefficient here may be, for example, a filter coefficient such that when a vehicle enters a shaded area from a sunny area, a change in illuminance value corresponding to 50% of an illuminance difference between the sunny area and the shaded area occurs with a delay of more than 500 msec from when the vehicle enters the shaded area. The filter coefficient may be set to an initial value to a degree that removes noise of a detection signal when a current drive cycle of the vehicle is initialized. In step S64, the ECU 10 calculates an illuminance filter value by the illuminance recognition unit 12. As a result, response of an illuminance filter value is delayed according to the condition change count. Thereafter, the ECU 10 ends processing of FIG. 7 and returns to processing of step S53 of FIG. 6.

On the other hand, when satisfaction and non-satisfaction of the DRL illuminance condition are not switched (step S61: NO), the ECU 10 skips resetting of a filter coefficient as in step S63. In step S64, the ECU 10 calculates an illuminance filter value by the illuminance recognition unit 12 using a previous value of a filter coefficient. Thereafter, the ECU 10 ends processing of FIG. 7 and returns to processing of step S53 of FIG. 6.

In step S53, the ECU 10 determines, by the lighting control unit 15, whether an illuminance filter value is equal to or less than a predetermined DRL illuminance threshold value. When it is determined by the lighting control unit 15 that an illuminance filter value is equal to or less than a predetermined DRL illuminance threshold value (step S53: YES), the ECU 10 proceeds to step S54. In step S54, the lighting control unit 15 determines satisfaction of the DRL illuminance condition. In step S55, the lighting control unit 15 executes turning on of the front clearance lamp 21 and the rear clearance lamp 24. Thereafter, the ECU 10 ends processing of FIG. 6.

On the other hand, when it is determined by the lighting control unit 15 that an illuminance filter value exceeds a predetermined DRL illuminance threshold value (step S53: NO), the ECU 10 proceeds to step S56. In step S56, the lighting control unit 15 determines non-satisfaction of the DRL illuminance condition. In step S57, the lighting control unit 15 executes turning off of the front clearance lamp 21 and the rear clearance lamp 24. Thereafter, the ECU 10 ends processing of FIG. 6.

The number of illuminance sensors 1 is not particularly limited. Illuminance may be detected by one sensor, or for example, illuminance sensors may be disposed in front, on a side, and at a rear of the vehicle, and illuminance may be detected by integrating data from these sensors.

The shadow estimation unit 13 may estimate a shadow state according to surrounding traffic conditions. For example, based on a captured image of the camera 2, it may be determined whether a shadow is cast on the illuminance sensor 1 according to whether a large bus or a large truck exists in front of the vehicle.

In the lighting control device 100 and the lighting control program, at least one of the shadow estimation unit 13 and the weather recognition unit 14 may be omitted. In the control method for a lighting control device, at least one of a shadow estimation step and a weather recognition step may be omitted.

## Claims

1. A lighting control device (100) configured to control a lighting device (20, 23) of a vehicle, the lighting control device (100) comprising:
an illuminance recognition unit (12) configured to recognize an illuminance around the vehicle based on a detection result of an in-vehicle sensor (1); and
a lighting control unit (15) configured to turn on a clearance lamp (21, 24) including a tail lamp (23) of the vehicle as a daytime running light when a predetermined DRL illuminance condition is satisfied based on a recognition result of the illuminance,
wherein the lighting control unit (15) suspends or delays at least one of an ON switching for turning on the clearance lamp (21, 24) when the DRL illuminance condition is satisfied while the clearance lamp (21, 24) is OFF and an OFF switching for turning off the clearance lamp (21, 24) when the DRL illuminance condition is not satisfied while the clearance lamp (21, 24) is ON, as a condition change count that is a count of switching between satisfaction and non-satisfaction of the DRL illuminance condition increases.

2. The lighting control device (100) according to claim 1,
wherein the DRL illuminance condition is satisfied when the illuminance is equal to or less than a predetermined DRL illuminance threshold,
wherein the condition change count is a cumulative count of switching between satisfaction and non-satisfaction of the DRL illuminance condition during a current drive cycle of the vehicle, and
wherein the lighting control unit (15) delays the OFF switching so as to lengthen a delay time as the condition change count increases.

3. The lighting control device (100) according to claim 1 or 2, further comprising:
a shadow estimation unit (13) configured to estimate a shadow state of the vehicle based on a current vehicle position of the vehicle and a solar radiation state at the vehicle position,
wherein, when it is estimated that a shadow is blocking solar radiation to the in-vehicle sensor (1) when the DRL illuminance condition is satisfied while the clearance lamp (21, 24) is OFF, the lighting control unit (15) suspends or delays the ON switching.

4. The lighting control device (100) according to any one of claims 1 to 3, further comprising:
a weather recognition unit (14) configured to recognize weather around the vehicle based on a captured image of an in-vehicle camera (2) or a communication result via an in-vehicle communication unit (7),
wherein, when the weather is recognized as clear or sunny weather when the DRL illuminance condition is satisfied while the clearance lamp (21, 24) is OFF, the lighting control unit (15) suspends or delays the ON switching.

5. A control method for a lighting control device (100) configured to control a lighting device (20, 23) of a vehicle, the control method comprising:
an illuminance recognition step of recognizing an illuminance around the vehicle based on a detection result of an in-vehicle sensor (1), by the lighting control device (100); and
a lighting control step of turning on a clearance lamp (21, 24) including a tail lamp (23) of the vehicle as a daytime running light when a predetermined DRL illuminance condition is satisfied based on a recognition result of the illuminance, by the lighting control device (100),
wherein, in the lighting control step, at least one of an ON switching for turning on the clearance lamp (21, 24) when the DRL illuminance condition is satisfied while the clearance lamp (21, 24) is OFF and an OFF switching for turning off the clearance lamp (21, 24) when the DRL illuminance condition is not satisfied while the clearance lamp (21, 24) is ON is held or delayed, as a condition change count that is a count of switching between satisfaction and non-satisfaction of the DRL illuminance condition increases.

6. A lighting control program causing a computer (10) to function as a lighting control device (100) configured to control a lighting device (20, 23) of a vehicle, the lighting control program causing the computer (10) to function as:
an illuminance recognition unit (12) configured to recognize an illuminance around the vehicle based on a detection result of an in-vehicle sensor (1); and
a lighting control unit (15) configured to turn on a clearance lamp (21, 24) including a tail lamp (23) of the vehicle as a daytime running light when a predetermined DRL illuminance condition is satisfied based on a recognition result of the illuminance,
wherein the lighting control unit (15) suspends or delays at least one of an ON switching for turning on the clearance lamp (21, 24) when the DRL illuminance condition is satisfied while the clearance lamp (21, 24) is OFF and an OFF switching for turning off the clearance lamp (21, 24) when the DRL illuminance condition is not satisfied while the clearance lamp (21, 24) is ON, as a condition change count that is a count of switching between satisfaction and non-satisfaction of the DRL illuminance condition increases.
